# EUROPÄISCHE PATENTSCHRIFT

(11) **EP 4 494 841 B1**
(45) Veröffentlichungstag und Bekanntmachung des Hinweises auf die Patenterteilung: **24.09.2025**
(21) Anmeldenummer: 24170767.8
(22) Anmeldetag: 17.04.2024
(51) Int. Cl.: B29C 49/78, B29C 49/06, B29C 49/64, B29K 67/00, B29L 31/00

(54) **REGELKREIS FÜR EINE VORRICHTUNG UMFASSEND EINE HEIZVORRICHTUNG FÜR PREFORMS UND UMFASSEND EINE BLASFORMMASCHINE ZUM HERSTELLEN VON BEHÄLTERN AUS VORERWÄRMTEN PREFORMS, VORRICHTUNG UMFASSEND EINE HEIZVORRICHTUNG FÜR PREFORMS UND UMFASSEND EINE BLASFORMMASCHINE ZUM HERSTELLEN VON BEHÄLTERN AUS VORERWÄRMTEN PREFORMS UND VERFAHREN ZUM REGELN DER LICHTTRANSMISSION VON BEHÄLTERN**
CONTROL CIRCUIT FOR A DEVICE COMPRISING A HEATING DEVICE FOR PREFORMS AND COMPRISING A BLOW MOLDING MACHINE FOR PRODUCING CONTAINERS FROM PREHEATED PREFORMS, DEVICE COMPRISING A HEATING DEVICE FOR PREFORMS AND COMPRISING A BLOW MOLDING MACHINE FOR PRODUCING CONTAINERS FROM PREHEATED PREFORMS AND METHOD FOR CONTROLLING THE LIGHT TRANSMISSION OF CONTAINERS
CIRCUIT DE COMMANDE POUR UN DISPOSITIF DE CHAUFFAGE DE PRÉFORMES ET COMPRENANT UNE MACHINE DE SOUFFLAGE POUR FABRIQUER DES RÉCIPIENTS À PARTIR DE PRÉFORMES PRÉCHAUFFÉES, DISPOSITIF COMPRENANT UN DISPOSITIF DE CHAUFFAGE POUR PRÉFORMES ET PROCÉDÉ DE FABRICATION DE RÉCIPIENTS

(30) Priorität: 21.07.2023 DE 102023119327
(43) Veröffentlichungstag der Anmeldung: 22.01.2025
(73) Patentinhaber: Krones AG, 93073 Neutraubling (DE)
(72) Erfinder: Boettcher, Benedikt, 93073 Neutraubling (DE)
(74) Vertreter: Grünecker Patent- und Rechtsanwälte PartG mbB

(56) Entgegenhaltungen:
- JP-A- H08 267 559
- US-A1- 2011 294 086
- US-A1- 2020 376 736
- US-B2- 11 559 934

## Beschreibung

Die Erfindung betrifft einen Regelkreis für eine Vorrichtung umfassend eine Heizvorrichtung für Preforms und umfassend eine Blasformmaschine zum Herstellen von Behältern aus vorerwärmten Preforms, eine Vorrichtung umfassend eine Heizvorrichtung für Preforms und umfassend eine Blasformmaschine zum Herstellen von Behältern aus vorerwärmten Preforms und ein Verfahren zum Regeln der Lichttransmission von Behältern gemäß den unabhängigen Ansprüchen.

Gattungsgemäße Vorrichtungen und Verfahren sind in den Patentschriften US11559934B2, US2011/294086A1, US2020/376736A1 und JPH08267559A beschrieben.

### Stand der Technik

Es ist bekannt für eine Regelung von Lichttransmissionswerten für PET-Behälter nach dem Streckblasen einen Regelkreis zu verwenden, der einen direkten Zusammenhang zwischen den Heizparametern eines Ofens zum Erwärmen der Preforms und den Streckblasparametern der Streckblasmaschine als Stellgrößen und den Lichttransmissionswerten der streckgeblasenen PET-Behälter als Regelgrößen herstellt. Im Allgemeinen erfolgt die Regelung stets in einem eingeschwungenen Maschinenzustand, d.h., ein Regeleingriff wird nach dem Erreichen des stationären Verhaltens der gemessenen Lichttransmissionswerte durchgeführt.

### Aufgabe

Die Aufgabe der Erfindung ist es, einen Regelkreis für eine Vorrichtung umfassend eine Heizvorrichtung für Preforms und umfassend eine Blasformmaschine zum Herstellen von Behältern aus vorerwärmten Preforms, eine Vorrichtung umfassend eine Heizvorrichtung für Preforms und umfassend eine Blasformmaschine zum Herstellen von Behältern aus vorerwärmten Preforms und ein Verfahren zum Regeln der Lichttransmission von Behältern zur Verfügung zu stellen, die eine Berücksichtigung einer Temperatur der Preforms beim Verlassen des Ofens und eines instationären Verhaltens der Lichttransmissionswerte ermöglichen können.

### Lösung

Die Aufgabe wird gelöst durch den Regelkreis für eine Vorrichtung umfassend eine Heizvorrichtung für Preforms und umfassend eine Blasformmaschine zum Herstellen von Behältern aus vorerwärmten Preforms, die Vorrichtung umfassend eine Heizvorrichtung für Preforms und umfassend eine Blasformmaschine zum Herstellen von Behältern aus vorerwärmten Preforms und das Verfahren zum Regeln der Lichttransmission von Behältern gemäß den unabhängigen Ansprüchen. Weitere Ausführungsformen sind in den Unteransprüchen offenbart.

Der erfindungsgemäße Regelkreis für eine Vorrichtung, die eine Heizvorrichtung für Preforms, beispielsweise PET-Preforms, eine Blasformmaschine zum Herstellen von Behältern, beispielsweise PET-Behältern, aus vorerwärmten Preforms, eine erste Messvorrichtung zum Ermitteln einer Ist-Temperatur der erwärmten Preforms und eine zweite Messvorrichtung zum Ermitteln einer Ist-Lichttransmission der Behälter umfasst, umfasst für ein Regeln der Lichttransmission von Behältern:
- einen übergeordneten Regelkreis mit:
   - einem ersten Vergleicher, der ausgebildet ist zum Ermitteln einer ersten Regeldifferenz aus einer Soll-Lichttransmission und einer Ist-Lichttransmission,
   - einem ersten Regler, der ausgebildet ist, basierend auf der ersten Regeldifferenz als erste Eingangsgröße für ein System eine erste Anpassung eines Prozessparameters einer Station der Blasformmaschine, wie etwa eines Vorblaszeitpunkts der Station der Blasformmaschine, als eine erste Ausgangsgröße auszugeben und den Prozessparameter der Station der Blasformmaschine entsprechend der ersten Anpassung zu regeln, wobei der erste Regler weiter ausgebildet ist, basierend auf der ersten Regeldifferenz als Eingangsgröße eine Soll-Temperatur der erwärmten Preform als eine zweite Ausgangsgröße auszugeben,
- einen untergeordneten Regelkreis mit:
   - einem zweiten Vergleicher, der ausgebildet ist zum Ermitteln einer zweiten Regeldifferenz aus der Soll-Temperatur der erwärmten Preform und der Ist-Temperatur der erwärmten Preform,
   - einem zweiten Regler, der ausgebildet ist, basierend auf der zweiten Regeldifferenz als zweite Eingangsgröße für das System eine zweite Anpassung eines Heizverhaltens der Heizvorrichtung als eine dritte Ausgangsgröße auszugeben und das Heizverhalten des Ofens entsprechend der zweiten Anpassung zu regeln.

Das System kann ein System zum Herstellen der Behälter aus Preforms, beispielsweise PET-Preforms, sein, das eine Heizvorrichtung für die Preforms und eine Blasformmaschine (bzw. Streckblasformmaschine) zum Herstellen von Behältern aus vorerwärmten Preforms umfassen kann.

Der Regelkreis kann ein Regeln auch vor Erreichen eines stationären Verhaltens der Ist-Lichttransmission ermöglichen. Ein instationäres Verhalten der Ist-Lichttransmission und der Ist-Temperatur (oder beispielsweise eines Ist-Temperaturgradienten (wenn die Ist-Temperatur eine Mehrzahl von Ist-Lichttransmissionswerten umfasst, die an den verschiedenen Stellen des Behälters ermittelt worden sein können, wobei beispielsweise die verschiedenen Stellen entlang einer Längsachse des Behälters angeordnet sein können)) kurz nach einem Regeleingriff oder in einer Startup-Phase können in die Regelung miteingehen.

Beispielsweise kann bei einer Änderung der Heizvorrichtung ein Austausch oder eine Anpassung des untergeordneten Regelkreises erforderlich sein. Der übergeordnete Regelkreis kann durch das allgemein gültige Konzept der Regelung der Lichttransmission der Behälter beibehalten werden.

Die Soll-Lichttransmission kann eine Mehrzahl von Soll-Lichttransmissionswerten für verschiedene Stellen des Behälters umfassen und die Ist-Lichttransmission kann eine Mehrzahl von Ist-Lichttransmissionswerten umfassen, die an den verschiedenen Stellen des Behälters ermittelt worden sein können. Beispielsweise können die verschiedenen Stellen entlang einer Längsachse des Behälters angeordnet sein. Das Ermitteln der ersten Regeldifferenz mittels des ersten Vergleichers kann also umfassen, dass die erste Regeldifferenz eine Mehrzahl von Regeldifferenzwerten umfasst, die entsprechend aus der Mehrzahl von Soll-Lichttransmissionswerten und der Mehrzahl von Ist-Lichttransmissionswerten ermittelt werden können.

Die Soll-Temperatur kann eine Mehrzahl von Soll-Temperaturwerten für verschiedene Stellen der Preform umfassen und die Ist-Temperatur kann eine Mehrzahl von Ist-Temperaturwerten umfassen, die an den verschiedenen Stellen der Preform ermittelt worden sein können. Beispielsweise können die verschiedenen Stellen an einer Oberfläche der Preform in verschiedenen Höhen senkrecht zu einer Längsachse des Behälters oder die verschiedenen Stellen können entlang eines Umfangs des Behälters angeordnet sein. Das Ermitteln der zweiten Regeldifferenz mittels des zweiten Vergleichers kann also umfassen, dass die zweite Regeldifferenz eine Mehrzahl von Regeldifferenzwerten umfasst, die entsprechend aus der Mehrzahl von Soll-Temperaturen und der Mehrzahl von Ist-Temperaturen ermittelt werden können.

Der Prozessparameter kann ein Vorblaszeitpunkt der Station der Blasformmaschine, ein Zwischenblaszeitpunkt, ein Hauptblaszeitpunkt der Station der Blasformmaschine, ein Reckzeitpunkt eines Reckvorgangs einer Reckstange der Blasform- bzw. Streckblasformmaschine, ein Vorblasdruck, ein Zwischenblasdruck, ein Hauptblasdruck und/oder eine Reckgeschwindigkeit sein

Der erste Regler kann ein experimentelles Modell für die eingeschwungene Vorrichtung umfassen. Im Allgemeinen können Behälter, beispielsweise PET-Behälter, die Blasformmaschine alle 1/100 Sekunde verlassen. Der erste Regler kann daher so schnell arbeiten, dass ein direktes Lernen der künstlichen Intelligenz möglich ist. Es ist nicht erforderlich, ein physikalisches Modell in ersten Regler zur Verfügung zu stellen. Parameter des experimentellen Modells können im Rahmen eines Versuchplans ermittelt werden, beispielsweise im Rahmen einer statistischen Versuchsplanung, DoE (Design of Experiment).

Das experimentelle Modell kann ausgebildet sein, Lichttransmissionen an unterschiedlichen Höhen eines Behälters in Abhängigkeit vom Prozessparameter und einem Temperaturgradienten der Temperatur der erwärmten Preform und/oder vom jeweiligen Verhalten der Stationen zu simulieren. Jede Station kann ein anderes Verhalten aufweisen. Beispielsweise können die Ventile an den jeweiligen Stationen unterschiedlich schalten (Toleranz).

Das experimentelle Modell kann weiter ausgebildet sein, die Lichttransmissionen für jede Station der Blasformmaschine nach einem Aufheizprozess individuell zu simulieren.

Der zweite Regler kann ein Systemmodell umfassen, das ausgebildet sein kann, eine zeitliche Dynamik eines Aufheizprozesses nach der zweiten Anpassung zu simulieren. Aufgrund des trägen Systemverhaltens eines Aufheizprozesses im Vergleich zu einer geforderten Abtastrate des zweiten Reglers sollte dieser auch mit instationären Zuständen des Aufheizprozesses umgehen können. Eine Preform, beispielsweise eine PET-Preform, kann eine Heizvorrichtung beispielsweise in 30 Sekunden durchlaufen. Eine Reaktionszeit der Heizvorrichtung auf die zweite Anpassung kann beispielsweise 2 Minuten betragen.

Das Systemmodell kann mindestens eines der folgenden berücksichtigten:
- einen Typ der Heizvorrichtung,
- eine geometrische Ausführung eines Heizraums der Heizvorrichtung,
- eine Geometrie der Preform,
- Werkstoffeigenschaften, der sich im Heizraum befindlichen Bauteile, beispielsweise Absorptions-, Reflexions- und/oder Emissionsgrad, Wärmeleitfähigkeit und/oder Dichte, Feuchtigkeit eines Kunststoffs,
- online messbare Parameter, beispielsweise mittels eines IR-Absorptionsgradsensors online messbare Parameter,
- Werte von zeitlich veränderlichen und/oder konstanten Aufheizparametern,
- anfänglicher Temperaturgradient der Preform an einem Eingang der Heizvorrichtung,
- freie und/oder erzwungene Konvektion im Heizraum.

Das Systemmodell kann ausgebildet sein, zu jedem Simulationszeitpunkt, resultierende Wärmeströme auf den Oberflächen der Preforms und der Konvektion zu berechnen. Diese können beispielsweise als Randbedingungen in eine numerisch explizite Lösung einer Wärmeleitungsgleichung für eine Preform eingehen.

Das Systemmodell kann ausgebildet sein, ein Preform-Wandvolumen in eine Vielzahl von Volumenelementen zu unterteilen. Beispielsweise kann für die Volumenelemente eine Homogenität von Werkstoffeigenschaften und der Temperatur gelten. Eine Diskretisierung des Preform-Wandvolumens in Volumenelemente kann eine effiziente Berechnung der resultierenden Temperaturen von den Volumenelementen durch eine numerisch explizite Lösung der Wärmeleitungsgleichung in Matrizenschreibweise ermöglichen.

Das Systemmodell kann ausgebildet sein, während eines Betriebs des zweiten Reglers verwendet zu werden und online einen Temperaturgradienten im Wandinnern der Preform in unterschiedlichen Höhen zu simulieren.

Der untergeordnete Regelkreis kann ausgebildet sein, Temperaturen im Wandinnern zusammen mit der Ist-Temperatur der erwärmten Preforms als Ist-Wert zu berücksichtigen. Da die Ist-Temperatur auf der Behälteroberfläche ermittelt werden kann, ist zusammen mit den Temperaturen im Wandinnern eine Durchwärmung der Preform berücksichtigbar. Die kann relevant für die sich ergebende Ist-Lichttransmission eines Behälters sein. Es kann vorteilhaft sein, diesen Einfluss in die Regelung miteinzubeziehen.

Für den übergeordneten Regelkreis und/oder den untergeordneten Regelkreis kann ein Reinforcement Learning Agent, eine modellbasierte Regelung, MPC-Regelung, oder ein Algorithmus, der einen optimalen Regeleingriff mittels einer online ausgeführten Optimierung über mehrere Abtastungen hinweg und unterstützt von einem Reinforcement Learning Agenten berechnet, vorgesehen sein, wobei die Abtastungen die Lichttransmission der Behälter oder die Temperatur der erwärmten Preforms betreffen können.

Der Regelkreis kann ausgebildet sein, die mittels der zweiten Messvorrichtung ermittelten Ist-Lichttransmissionen der Behälter den jeweiligen Stationen zuzuordnen. Somit kann eine individuelle Regelung der einzelnen Stationen stattfinden.

Weiter ist eine Vorrichtung vorgesehen, umfassend eine Heizvorrichtung für Preforms, beispielsweise PET-Preforms, eine Blasformmaschine zum Herstellen von Behältern, beispielsweise **PET-**Behältern, aus vorerwärmten Preforms, eine erste Messvorrichtung zum Ermitteln einer Ist-Temperatur der vorerwärmten Preforms und eine zweite Messvorrichtung zum Ermitteln einer Ist-Lichttransmission der Behälter und einen Regelkreis, wie oben oder weiter unten beschrieben.

Die Heizvorrichtung kann einen Infrarot-Ofen oder einen Mikrowellen-Ofen oder einen Laser-Ofen umfassen.

Der Infrarot-Ofen kann Heizungsteller in mehreren Lampen-Zonen umfassen, wobei die Heizungsteller durch den Regelkreis regelbar ausgebildet sein können. Beispielsweise können die Heizungsteller einzeln durch den Regelkreis regelbar ausgebildet sein.

Bei einem Mikrowellen-Ofen können Positionen von Schieberelementen und/oder eine Generatorleistung durch den Regelkreis regelbar ausgebildet sein. Beispielsweise können die Schieberelemente und/oder eine Generatorleistung einzeln durch den Regelkreis regelbar ausgebildet sein.

Die erste Messvorrichtung kann an einem Ausgang der Heizvorrichtung angeordnet sein und ein Pyrometer und/oder eine Wärmebildkamera umfassen, der ausgebildet sein kann, Ist-Temperaturwerte der erwärmten Preform auf deren Oberfläche in unterschiedlichen Höhen und/oder Umfangsrichtung zu messen.

Die zweite Messvorrichtung kann ausgebildet sein, Ist-Lichttransmissionswerte der Behälter in unterschiedlichen Höhen und/oder Umfangsrichtung zu messen.

Weiter ist ein Verfahren zum Regeln der Lichttransmission von Behältern, beispielsweise PET-Behältern, unter Verwendung einer Vorrichtung, wie oben oder weiter unten beschrieben, vorgesehen, wobei das Verfahren umfasst:
- Ermitteln einer Ist-Temperatur einer erwärmten Preform, beispielsweise PET-Preform, mittels der ersten Messvorrichtung,
- Ermitteln einer Ist-Lichttransmission eines Behälters, der aus der erwärmten Preform hergestellt wurde, mittels der zweiten Messvorrichtung,
- Ermitteln einer ersten Regeldifferenz aus einer Soll-Lichttransmission und der Ist-Lichttransmission mittels des ersten Vergleichers,
- Ausgeben einer ersten Anpassung eines Prozessparameters einer Station der Blasformmaschine, wie etwa eines Vorblaszeitpunkts der Station der Blasformmaschine, als eine erste Ausgangsgröße mittels des ersten Reglers, basierend auf der ersten Regeldifferenz als erste Eingangsgröße und Regeln des Prozessparameters der Station der Blasformmaschine entsprechend der ersten Anpassung und Ausgeben einer Soll-Temperatur der erwärmten Preform als eine zweite Ausgangsgröße, basierend auf der ersten Regeldifferenz als Eingangsgröße,
- Ermitteln einer zweiten Regeldifferenz aus der Soll-Temperatur der erwärmten Preform und der Ist-Temperatur der erwärmten Preform mittels des zweiten Vergleichers,
- Ausgeben einer zweiten Anpassung eines Heizverhaltens der Heizvorrichtung als eine dritte Ausgangsgröße mittels des zweiten Reglers, basierend auf der zweiten Regeldifferenz als zweite Eingangsgröße und Regeln des Heizverhaltens des Ofens entsprechend der zweiten Anpassung.

### Kurze Figurenbeschreibung

Die beigefügte Figur stellt beispielhaft zum besseren Verständnis und zur Veranschaulichung Aspekte und/oder ein Ausführungsbeispiel der Erfindung dar. Es zeigt:

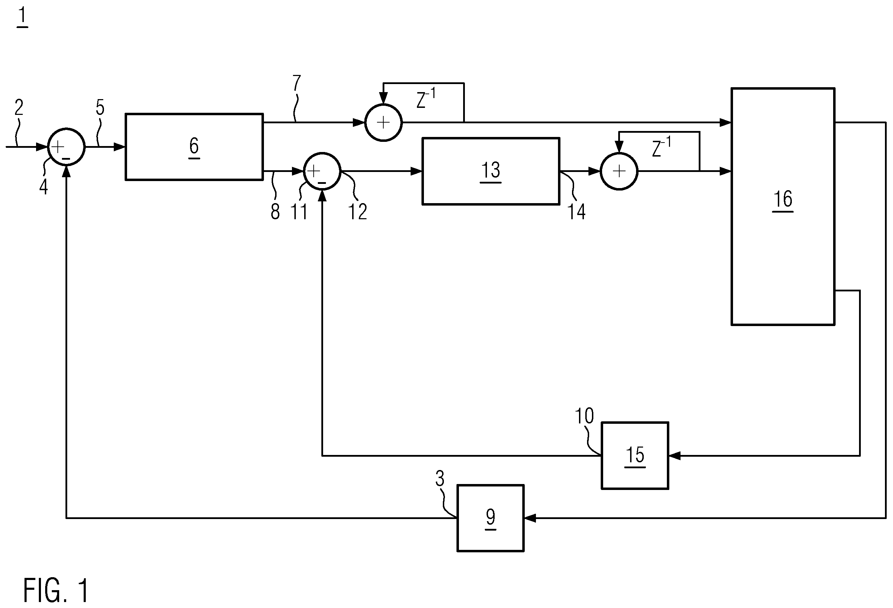

Figur 1 einen Regelkreis für ein Regeln der Lichttransmission von Behältern, beispielsweise PET-Behältern.

### Ausführliche Figurenbeschreibung

Die Figur 1 zeigt einen Regelkreis 1 für ein Regeln der Lichttransmission von Behältern, beispielsweise PET-Behältern. Ein System 16 zum Herstellen der Behälter aus Preforms, beispielsweise PET-Preforms, umfasst eine Heizvorrichtung für die Preforms und eine Blasformmaschine (bzw. Streckblasformmaschine) zum Herstellen von Behältern aus vorerwärmten Preforms.

Der Regelkreis 1 umfasst einen übergeordneten Regelkreis mit einem ersten Vergleicher 4, der ausgebildet ist zum Ermitteln einer ersten Regeldifferenz 5 aus einer Soll-Lichttransmission 2 und einer Ist-Lichttransmission 3. Ein Ermitteln der Ist-Lichttransmission der Behälter erfolgt mittels einer zweite Messvorrichtung 9. Die Soll-Lichttransmission 2 kann eine Mehrzahl von Soll-Lichttransmissionswerten für verschiedene Stellen des Behälters umfasst und die Ist-Lichttransmission 3 kann eine Mehrzahl von Ist-Lichttransmissionswerten umfassen, die an den verschiedenen Stellen des Behälters ermittelt worden sein können. Beispielsweise können die verschiedenen Stellen entlang einer Längsachse des Behälters angeordnet sein.

Ein erster Regler 6 des übergeordneten Regelkreises ist ausgebildet, basierend auf der ersten Regeldifferenz 5 als erste Eingangsgröße eine erste Anpassung 7 eines Prozessparameters einer Station der Blasformmaschine als eine erste Ausgangsgröße auszugeben. Der Prozessparameter kann ein Vorblaszeitpunkt der Station der Blasformmaschine, ein Zwischenblaszeitpunkt, ein Hauptblaszeitpunkt der Station der Blasformmaschine, ein Reckzeitpunkt eines Reckvorgangs einer Reckstange der Blasform- bzw. Streckblasformmaschine, ein Vorblasdruck, ein Zwischenblasdruck, ein Hauptblasdruck und/oder eine Reckgeschwindigkeit sein. Es können auch mehrere Prozessparameter einer Station der Blasformmaschine von dem ersten Regler 6 geregelt werden, z.B. mehrere der oben genannten Prozessparameter. Der erste Regler 6 ist weiter ausgebildet, den Prozessparameter der Station der Blasformmaschine entsprechend der ersten Anpassung 7 zu regeln.

Zudem ist der erste Regler 6 weiter ausgebildet, basierend auf der ersten Regeldifferenz 5 als Eingangsgröße eine Soll-Temperatur 8 der erwärmten Preform als eine zweite Ausgangsgröße auszugeben. Die Soll-Temperatur 8 kann eine Mehrzahl von Soll-Temperaturwerten für verschiedene Stellen der Preform umfassen.

Der Regelkreis 1 umfasst zudem einen untergeordneten Regelkreis mit einem zweiten Vergleicher 11, der ausgebildet ist zum Ermitteln einer zweiten Regeldifferenz 12 aus der Soll-Temperatur 8 der erwärmten Preform und der Ist-Temperatur 10 der erwärmten Preform. Das Ermitteln der Ist-Temperatur der erwärmten Preforms erfolgt mittels der ersten Messvorrichtung 15. Die Ist-Temperatur 10 kann eine Mehrzahl von Ist-Temperaturwerten umfassen, die an den hinsichtlich der Soll-Temperatur erwähnten, verschiedenen Stellen der Preform ermittelt worden sein können. Beispielsweise können die verschiedenen Stellen an einer Oberfläche der Preform in verschiedenen Höhen senkrecht zu einer Längsachse des Behälters angeordnet sein. Die Ist-Temperatur (auch an verschiedenen Stellen des Preforms) kann z.B. mit einem Pyrometer und/oder einer Wärmebildkamera ermittelt werden.

Weiter umfasst der untergeordnete Regelkreis einem zweiten Regler 13, der ausgebildet ist, basierend auf der zweiten Regeldifferenz 12 als zweite Eingangsgröße eine zweite Anpassung 14 eines Heizverhaltens der Heizvorrichtung als eine dritte Ausgangsgröße auszugeben und das Heizverhalten des Ofens entsprechend der zweiten Anpassung 14 zu regeln.

## Patentansprüche

1. Regelkreis (1) für eine Vorrichtung umfassend eine Heizvorrichtung für Preforms, beispielsweise PET-Preforms, eine Blasformmaschine zum Herstellen von Behältern, beispielsweise PET-Behältern, aus vorerwärmten Preforms, eine erste Messvorrichtung (15) zum Ermitteln einer Ist-Temperatur der erwärmten Preforms und eine zweite Messvorrichtung (9) zum Ermitteln einer Ist-Lichttransmission der Behälter, wobei der Regelkreis (1) für ein Regeln der Lichttransmission von Behältern umfasst:
- einen übergeordneten Regelkreis mit:
- einem ersten Vergleicher (4), der ausgebildet ist zum Ermitteln einer ersten Regeldifferenz (5) aus einer Soll-Lichttransmission (2) und einer Ist-Lichttransmission (3),
- einem ersten Regler (6), der ausgebildet ist, basierend auf der ersten Regeldifferenz (5) als erste Eingangsgröße für ein System (16) eine erste Anpassung (7) eines Prozessparameters einer Station der Blasformmaschine, wie etwa eines Vorblaszeitpunkts der Station der Blasformmaschine, als eine erste Ausgangsgröße auszugeben und den Prozessparameter der Station der Blasformmaschine entsprechend der ersten Anpassung (7) zu regeln, wobei der erste Regler (6) weiter ausgebildet ist, basierend auf der ersten Regeldifferenz (5) als Eingangsgröße eine Soll-Temperatur (8) der erwärmten Preform als eine zweite Ausgangsgröße auszugeben,
- einen untergeordneten Regelkreis mit:
- einem zweiten Vergleicher (11), der ausgebildet ist zum Ermitteln einer zweiten Regeldifferenz (12) aus der Soll-Temperatur (8) der erwärmten Preforms und der Ist-Temperatur (10) der erwärmten Preform,
- einem zweiten Regler (13), der ausgebildet ist, basierend auf der zweiten Regeldifferenz (12) als zweite Eingangsgröße für das System (16) eine zweite Anpassung (14) eines Heizverhaltens der Heizvorrichtung als eine dritte Ausgangsgröße auszugeben und das Heizverhalten des Ofens entsprechend der zweiten Anpassung (14) zu regeln.

2. Der Regelkreis nach Anspruch 1, wobei die Soll-Lichttransmission (2) eine Mehrzahl von Soll-Lichttransmissionswerten für verschiedene Stellen des Behälters umfasst und wobei die Ist-Lichttransmission (3) eine Mehrzahl von Ist-Lichttransmissionswerten umfasst, die an den verschiedenen Stellen des Behälters ermittelt wurden, wobei beispielsweise die verschiedenen Stellen entlang einer Längsachse des Behälters angeordnet sind.

3. Der Regelkreis nach Anspruch 1 oder 2, wobei die Soll-Temperatur (8) eine Mehrzahl von Soll-Temperaturwerten für verschiedene Stellen der Preform umfasst und wobei die Ist-Temperatur (10) eine Mehrzahl von Ist-Temperaturwerten umfasst, die an den verschiedenen Stellen der Preform ermittelt wurden, wobei beispielsweise die verschiedenen Stellen an einer Oberfläche der Preform in verschiedenen Höhen senkrecht zu einer Längsachse des Behälters angeordnet sind.

4. Der Regelkreis nach einem der Ansprüche 1 bis 3, wobei der erste Regler (6) ein experimentelles Modell für die eingeschwungene Vorrichtung umfasst,
wobei beispielsweise das experimentelle Modell ausgebildet ist, Lichttransmissionen an unterschiedlichen Höhen eines Behälters in Abhängigkeit vom Prozessparameter und einem Temperaturgradienten der Temperatur der erwärmten Preform und/oder vom jeweiligen Verhalten der Stationen zu simulieren,
wobei beispielsweise das experimentelle Modell weiter ausgebildet ist, die Lichttransmissionen für jede Station der Blasformmaschine nach einem Aufheizprozess individuell zu simulieren.

5. Der Regelkreis nach einem der Ansprüche 1 bis 4, wobei der zweite Regler (13) ein Systemmodell umfasst, das ausgebildet ist, eine zeitliche Dynamik eines Aufheizprozesses nach der zweiten Anpassung zu simulieren.

6. Der Regelkreis nach Anspruch 5, wobei das Systemmodell mindestens eines der folgenden berücksichtigt:
- einen Typ der Heizvorrichtung,
- eine geometrische Ausführung eines Heizraums der Heizvorrichtung,
- eine Geometrie der Preform,
- Werkstoffeigenschaften, der sich im Heizraum befindlichen Bauteile, beispielsweise Absorptions-, Reflexions- und/oder Emissionsgrad, Wärmeleitfähigkeit und/oder Dichte, Feuchtigkeit eines Kunststoffs,
- online messbare Parameter, beispielsweise mittels eines IR-Absorptionsgradsensors online messbare Parameter,
- Werte von zeitlich veränderlichen und/oder konstanten Aufheizparametern,
- anfänglicher Temperaturgradient der Preform an einem Eingang der Heizvorrichtung,
- freie und/oder erzwungene Konvektion im Heizraum.

7. Der Regelkreis nach Anspruch 5 oder 6, wobei das Systemmodell ausgebildet ist, zu jedem Simulationszeitpunkt, resultierende Wärmeströme auf den Oberflächen der Preforms und der Konvektion zu berechnen, wobei diese beispielsweise als Randbedingungen in eine numerisch explizite Lösung einer Wärmeleitungsgleichung für eine Preform eingehen.

8. Der Regelkreis nach einem der Ansprüche 5 bis 7, wobei das Systemmodell ausgebildet ist, ein Preform-Wandvolumen in eine Vielzahl von Volumenelementen zu unterteilen, wobei beispielsweise für die Volumenelemente eine Homogenität von Werkstoffeigenschaften und der Temperatur gilt,
wobei beispielsweise das Systemmodell ausgebildet ist, während eines Betriebs des zweiten Reglers (13) verwendet zu werden und online einen Temperaturgradienten im Wandinnern der Preform in unterschiedlichen Höhen zu simulieren,
wobei beispielsweise der untergeordnete Regelkreis ausgebildet ist, Temperaturen im Wandinnern zusammen mit der Ist-Temperatur (10) der erwärmten Preforms als Ist-Wert zu berücksichtigen.

9. Der Regelkreis nach einem der Ansprüche 1 bis 8, wobei für den übergeordneten Regelkreis und/oder den untergeordneten Regelkreis ein Reinforcement Learning Agent, eine modellbasierte Regelung, MPC-Regelung, oder ein Algorithmus, der einen optimalen Regeleingriff mittels einer online ausgeführten Optimierung über mehrere Abtastungen hinweg und/oder unterstützt von einem Reinforcement Learning Agenten berechnet, vorgesehen ist, wobei die Abtastungen die Lichttransmission der Behälter oder die Temperatur der erwärmten Preforms betreffen.

10. Der Regelkreis nach einem der Ansprüche 1 bis 9, der weiter ausgebildet ist, die mittels der zweiten Messvorrichtung (9) ermittelten Ist-Lichttransmissionen der Behälter den jeweiligen Stationen zuzuordnen.

11. Vorrichtung umfassend eine Heizvorrichtung für Preforms, beispielsweise PET-Preforms, eine Blasformmaschine zum Herstellen von Behältern, beispielsweise PET-Behältern, aus vorerwärmten Preforms, eine erste Messvorrichtung (15) zum Ermitteln einer Ist-Temperatur (10) der vorerwärmten Preforms und eine zweite Messvorrichtung (9) zum Ermitteln einer Ist-Lichttransmission (3) der Behälter,
**dadurch gekennzeichnet, dass**
die Vorrichtung einen Regelkreis (1) nach einem der Ansprüche 1 bis 10 umfasst.

12. Die Vorrichtung nach Anspruch 11, wobei die Heizvorrichtung einen Infrarot-Ofen oder einen Mikrowellen-Ofen oder einen Laser-Ofen umfasst,
wobei beispielsweise der Infrarot-Ofen Heizungsteller in mehreren Lampen-Zonen umfasst, wobei die Heizungsteller durch den Regelkreis (1) regelbar ausgebildet sind, wobei beispielsweise die Heizungsteller einzeln durch den Regelkreis (1) regelbar ausgebildet sind,
oder
wobei beispielsweise bei einem Mikrowellen-Ofen Positionen von Schieberelementen und/oder eine Generatorleistung durch den Regelkreis (1) regelbar ausgebildet sind, wobei beispielsweise die Schieberelemente und/oder die Generatorleistung einzeln durch den Regelkreis (1) regelbar ausgebildet sind.

13. Die Vorrichtung nach Anspruch 11 oder 12, wobei die erste Messvorrichtung (15) an einem Ausgang der Heizvorrichtung angeordnet ist und ein Pyrometer und/oder eine Wärmebildkamera umfasst, der ausgebildet ist, Ist-Temperaturwerte (10) der erwärmten Preform auf deren Oberfläche in unterschiedlichen Höhen und/oder Umfangsrichtung zu messen.

14. Die Vorrichtung nach einem der Ansprüche 11 bis 13, wobei die zweite Messvorrichtung (9) ausgebildet ist, Ist-Lichttransmissionswerte (3) der Behälter in unterschiedlichen Höhen und/oder Umfangsrichtung zu messen.

15. Verfahren zum Regeln der Lichttransmission von Behältern, beispielsweise PET-Behältern, unter Verwendung einer Vorrichtung nach einem der Ansprüche 11 bis 14, wobei das Verfahren umfasst:
- Ermitteln einer Ist-Temperatur (10) einer erwärmten Preform, beispielsweise PET-Preform, mittels der ersten Messvorrichtung (15),
- Ermitteln einer Ist-Lichttransmission (3) eines Behälters, der aus der erwärmten Preform hergestellt wurde, mittels der zweiten Messvorrichtung (9),
- Ermitteln einer ersten Regeldifferenz (5) aus einer Soll-Lichttransmission (2) und der Ist-Lichttransmission (3) mittels des ersten Vergleichers (4),
- Ausgeben einer ersten Anpassung (7) eines Prozessparameters einer Station der Blasformmaschine, wie etwa eines Vorblaszeitpunkts der Station der Blasformmaschine, als eine erste Ausgangsgröße mittels des ersten Reglers (6), basierend auf der ersten Regeldifferenz (5) als erste Eingangsgröße für ein System (16) und Regeln des Prozessparameters der Station der Blasformmaschine entsprechend der ersten Anpassung (7) und Ausgeben einer Soll-Temperatur (8) der erwärmten Preform als eine zweite Ausgangsgröße, basierend auf der ersten Regeldifferenz (5) als Eingangsgröße,
- Ermitteln einer zweiten Regeldifferenz (12) aus der Soll-Temperatur (8) der erwärmten Preform und der Ist-Temperatur (10) der erwärmten Preform mittels des zweiten Vergleichers (11),
- Ausgeben einer zweiten Anpassung (14) eines Heizverhaltens der Heizvorrichtung als eine dritte Ausgangsgröße mittels des zweiten Reglers (13), basierend auf der zweiten Regeldifferenz (12) als zweite Eingangsgröße für ein System (16) und Regeln des Heizverhaltens des Ofens entsprechend der zweiten Anpassung (14).

## Claims

1. Control circuit (1) for an apparatus comprising a heating device for preforms, for example PET preforms, a blow molding machine for producing containers, for example PET containers, from preheated preforms, a first measuring device (15) for determining an actual temperature of the heated preforms and a second measuring device (9) for determining an actual light transmission of the containers, wherein the control circuit (1) for controlling the light transmission of containers comprises:
- a higher-level control circuit, having:
- a first comparator (4), which is configured to determine a first control difference (5) from a target light transmission (2) and an actual light transmission (3),
- a first controller (6) which is configured to output a first adaptation (7) of a process parameter of a station of the blow molding machine, such as a pre-blowing time of the station of the blow molding machine, as a first output variable, based on the first control difference (5) as a first input variable for a system (16), and to control the process parameter of the station of the blow molding machine in accordance with the first adaptation (7), wherein the first controller (6) is further configured to output a target temperature (8) of the heated preform as a second output variable based on the first control difference (5) as an input variable,
- a subordinate control circuit, having:
- a second comparator (11), which is configured to determine a second control difference (12) from the target temperature (8) of the heated preforms and the actual temperature (10) of the heated preform,
- a second controller (13) which is configured to output a second adaptation (14) of a heating behavior of the heating device as a third output variable, based on the second control difference (12) as a second input variable for the system (16), and to control the heating behavior of the furnace in accordance with the second adaptation (14).

2. Control circuit according to claim 1, wherein the target light transmission (2) comprises a plurality of target light transmission values for different locations of the container and wherein the actual light transmission (3) comprises a plurality of actual light transmission values determined at the different locations of the container, wherein, for example, the different locations are arranged along a longitudinal axis of the container.

3. Control circuit according to claim 1 or2, wherein the target temperature (8) comprises a plurality of target temperature values for different locations of the preform and wherein the actual temperature (10) comprises a plurality of actual temperature values determined at the different locations of the preform, wherein, for example, the different locations on a surface of the preform are arranged at different heights perpendicular to a longitudinal axis of the container.

4. Control circuit according to any of claims 1 to 3, wherein the first controller (6) comprises an experimental model for the steady-state device,
wherein, for example, the experimental model is configured to simulate light transmissions at different heights of a container depending on the process parameter and a temperature gradient of the temperature of the heated preform and/or of the respective behavior of the stations,
wherein, for example, the experimental model is further configured to individually simulate the light transmissions for each station of the blow molding machine following a heating process.

5. Control circuit according to any of claims 1 to 4, wherein the second controller (13) comprises a system model which is configured to simulate a temporal dynamic of a heating process following the second adaptation.

6. Control circuit according to claim 5, wherein the system model takes into account at least one of the following:
- a type of the heating device,
- a geometric design of a heating chamber of the heating device,
- a geometry of the preform,
- material properties of the components located in the heating chamber, for example absorptance, reflectance and/or emissivity, thermal conductivity and/or density, moisture of a plastics material,
- parameters that are measurable online, for example parameters that can be measured online using an IR absorptance sensor,
- values of temporally varying and/or constant heating parameters,
- initial temperature gradient of the preform at an inlet of the heating device,
- free and/or forced convection in the heating chamber.

7. Control circuit according to either claim 5 or claim 6, wherein the system model is configured to calculate, at each simulation time, resulting heat flows on the surfaces of the preforms and the convection, wherein these are included, for example as boundary conditions, in a numerically explicit solution of a heat conduction equation for a preform.

8. Control circuit according to any of claims 5 to 7, wherein the system model is configured to divide a preform wall volume into a plurality of volume elements, wherein, for example, homogeneity of material properties and temperature applies for the volume elements,
wherein, for example, the system model is configured to be used during operation of the second controller (13) and to simulate online a temperature gradient inside the wall of the preform at different heights,
wherein, for example, the subordinate control circuit is configured to take into account temperatures inside the wall together with the actual temperature (10) of the heated preforms as an actual value.

9. Control circuit according to any of claims 1 to 8, wherein a reinforcement learning agent, a model-based control, MPC control, or an algorithm that calculates an optimal control intervention by an optimization executed online over multiple scans and/or supported by a reinforcement learning agent is provided for the higher-level control circuit and/or the subordinate control circuit, wherein the scans relate to the light transmission of the containers or the temperature of the heated preforms.

10. Control circuit according to any of claims 1 to 9, which is further configured to assign the actual light transmissions of the containers determined by the second measuring device (9) to the respective stations.

11. Apparatus comprising a heating device for preforms, for example PET preforms, a blow molding machine for producing containers, for example PET containers, from preheated preforms, a first measuring device (15) for determining an actual temperature (10) of the preheated preforms, and a second measuring device (9) for determining an actual light transmission (3) of the containers,
**characterized in that**
the apparatus comprises a control circuit (1) according to any of claims 1 to 10.

12. Apparatus according to claim 11, wherein the heating device comprises an infrared furnace or a microwave furnace or a laser furnace,
wherein, for example, the infrared furnace comprises heating plates in multiple lamp zones, wherein the heating plates are configured to be controllable by the control circuit (1), wherein, for example, the heating plates are configured to be individually controllable by the control circuit (1),
or
wherein, for example in the case of a microwave furnace, positions of slide elements and/or a generator output are configured to be controllable by the control circuit (1), wherein, for example, the slide elements and/or the generator output are configured to be individually controllable by the control circuit (1).

13. Apparatus according to either claim 11 or claim 12, wherein the first measuring device (15) is arranged at an outlet of the heating device and comprises a pyrometer and/or a thermal imaging camera that is configured to measure actual temperature values (10) of the heated preform on its surface at different heights and/or peripheral directions.

14. Apparatus according to any of claims 11 to 13, wherein the second measuring device (9) is configured to measure actual light transmission values (3) of the containers at different heights and/or peripheral directions.

15. Method for controlling the light transmission of containers, for example **PET** containers, using an apparatus according to any of claims 11 to 14, wherein the method comprises:
- determining an actual temperature (10) of a heated preform, for example PET preform, by the first measuring device (15),
- determining an actual light transmission (3) of a container produced from the heated preform, by the second measuring device (9),
- determining a first control difference (5) from a target light transmission (2) and the actual light transmission (3), by the first comparator (4),
- outputting a first adaptation (7) of a process parameter of a station of the blow molding machine, such as a pre-blowing time of the station of the blow molding machine, as a first output variable, by the first controller (6), based on the first control difference (5) as a first input variable for a system (16), and controlling the process parameter of the station of the blow molding machine according to the first adaptation (7) and outputting a target temperature (8) of the heated preform as a second output variable, based on the first control difference (5) as an input variable,
- determining a second control difference (12) from the target temperature (8) of the heated preform and the actual temperature (10) of the heated preform by the second comparator (11),
- outputting a second adaptation (14) of a heating behavior of the heating device as a third output variable, by the second controller (13), based on the second control difference (12) as a second input variable for a system (16), and controlling the heating behavior of the furnace according to the second adaptation (14).

## Revendications

1. Boucle de régulation (1) pour un dispositif comprenant un dispositif de chauffage pour des préformes, par exemple des préformes en **PET,** une machine de moulage par soufflage permettant de fabriquer des récipients, par exemple des récipients en **PET,** à partir de préformes préchauffées, un premier dispositif de mesure (15) permettant de déterminer une température réelle des préformes chauffées et un second dispositif de mesure (9) permettant de déterminer une transmission de lumière réelle des récipients, dans laquelle la boucle de régulation (1) destinée à réguler la transmission de lumière des récipients comprend :
- une boucle de régulation de niveau supérieur avec :
- un premier comparateur (4) conçu pour déterminer une première différence de régulation (5) à partir d'une transmission de lumière de consigne (2) et d'une transmission de lumière réelle (3),
- un premier régulateur (6) conçu pour émettre un premier ajustement (7) d'un paramètre de procédé d'un poste de la machine de moulage par soufflage, tel qu'un moment de pré-soufflage du poste de la machine de moulage par soufflage, tenant lieu de première valeur de sortie pour un système (16), en se basant sur la première différence de régulation (5), et pour réguler le paramètre de procédé du poste de la machine de moulage par soufflage conformément au premier ajustement (7), dans laquelle le premier régulateur (6) est en outre conçu pour émettre une température de consigne (8) de la préforme chauffée tenant lieu de deuxième valeur de sortie, en se basant sur la première différence de régulation (5) tenant lieu de valeur d'entrée,
- une boucle de régulation de niveau inférieur avec :
- un second comparateur (11) conçu pour déterminer une seconde différence de régulation (12) à partir de la température de consigne (8) des préformes chauffées et de la température réelle (10) de la préforme chauffée,
- un second régulateur (13) conçu pour émettre un second ajustement (14) d'un comportement de chauffage du dispositif de chauffage tenant lieu de troisième valeur de sortie, en se basant sur la seconde différence de régulation (12) tenant lieu de deuxième valeur d'entrée pour le système (16) et pour réguler le comportement de chauffage du four conformément au second ajustement (14).

2. Boucle de régulation selon la revendication 1, dans laquelle la transmission de lumière de consigne (2) comprend une pluralité de valeurs de transmission de lumière de consigne pour différents emplacements du récipient et dans laquelle la transmission de lumière réelle (3) comprend une pluralité de valeurs de transmission de lumière réelle qui ont été déterminées au niveau des différents emplacements du récipient, dans laquelle les différents emplacements sont par exemple agencés le long d'un axe longitudinal du récipient.

3. Boucle de régulation selon la revendication 1 ou 2, dans laquelle la température de consigne (8) comprend une pluralité de valeurs de température de consigne pour différents emplacements de la préforme et dans laquelle la température réelle (10) comprend une pluralité de valeurs de température réelles qui ont été déterminées au niveau de différents emplacements de la préforme, dans laquelle les différents emplacements sur une surface de la préforme sont par exemple agencés à différentes hauteurs perpendiculairement à un axe longitudinal du récipient.

4. Boucle de régulation selon l'une quelconque des revendications 1 à 3, dans laquelle le premier régulateur (6) comprend un modèle expérimental pour le dispositif traité,
dans laquelle le modèle expérimental est par exemple conçu pour simuler des transmissions de lumière à différentes hauteurs d'un récipient en fonction du paramètre de procédé et d'un gradient de température de la température de la préforme chauffée et/ou du comportement respectif des postes,
dans laquelle le modèle expérimental est par exemple conçu en outre pour simuler individuellement les transmissions de lumière pour chaque poste de la machine de moulage par soufflage après un procédé de chauffage.

5. Boucle de régulation selon l'une quelconque des revendications 1 à 4, dans laquelle le second régulateur (13) comprend un modèle de système conçu pour simuler une dynamique temporelle d'un procédé de chauffage après le second ajustement.

6. Boucle de régulation selon la revendication 5, dans laquelle le modèle de système prend en compte au moins une des caractéristiques ci-dessous :
- un type de dispositif de chauffage,
- un mode de réalisation géométrique d'une chaufferie du dispositif de chauffage,
- une géométrie de la préforme,
- des propriétés de matériau des composants se trouvant dans la chaufferie, par exemple le degré d'absorption, de réflexion, et/ou d'émission, la conductivité thermique et/ou la densité, l'humidité d'une matière plastique,
- des paramètres mesurables en ligne, par exemple des paramètres mesurables en ligne au moyen d'un capteur de degré d'absorption **IR,**
- des valeurs de paramètres de chauffage variables dans le temps et/ou constants,
- un gradient de température initial de la préforme au niveau d'une entrée du dispositif de chauffage,
- une convection libre et/ou forcée au sein de la chaufferie.

7. Boucle de régulation selon la revendication 5 ou 6, dans laquelle le modèle de système est conçu pour calculer, à chaque instant de simulation, des flux de chaleur résultants sur les surfaces des préformes et la convection, dans laquelle lesdits flux de chaleur et convection font par exemple office de conditions limites dans une solution numériquement explicite d'une équation de conduction thermique pour une préforme.

8. Boucle de régulation selon l'une quelconque des revendications 5 à 7, dans laquelle le modèle de système est conçu pour diviser un volume de paroi de préforme en une pluralité d'éléments de volume, dans laquelle une homogénéité des propriétés de matériau et de la température s'applique par exemple aux éléments de volume, dans laquelle le modèle de système est par exemple conçu pour être utilisé pendant un fonctionnement du second régulateur (13) et pour simuler en ligne un gradient de température au niveau de l'intérieur de paroi de la préforme à différentes hauteurs, dans laquelle la boucle de régulation de niveau inférieur est par exemple conçue pour prendre en compte comme valeur réelle les températures au niveau de l'intérieur de paroi ainsi que la température réelle (10) des préformes chauffées.

9. Boucle de régulation selon l'une quelconque des revendications 1 à 8, dans laquelle un agent d'apprentissage par renforcement, une régulation basée sur un modèle, une régulation prédictive MPC ou un algorithme qui calcule une intervention de régulation optimale au moyen d'une optimisation effectuée en ligne sur plusieurs échantillons et/ou en étant assisté par un agent d'apprentissage par renforcement, est fourni pour la boucle de régulation de niveau supérieur et/ou pour la boucle de régulation de niveau inférieur, dans laquelle les échantillons concernent la transmission de lumière des récipients ou la température des préformes chauffées.

10. Boucle de régulation selon l'une quelconque des revendications 1 à 9, qui est en outre conçue pour attribuer aux postes respectifs les transmissions de lumière réelle, déterminées au moyen du second dispositif de mesure (9), des récipients.

11. Dispositif comprenant un dispositif de chauffage pour des préformes, par exemple des préformes en PET, une machine de moulage par soufflage permettant de fabriquer des récipients, par exemple des récipients en PET, à partir de préformes préchauffées, un premier dispositif de mesure (15) permettant de déterminer une température réelle (10) des préformes préchauffées et un second dispositif de mesure (9) permettant de déterminer une transmission de lumière réelle (3) des récipients,
**caractérisé en ce que**
le dispositif comprend une boucle de régulation (1) selon l'une quelconque des revendications 1 à 10.

12. Dispositif selon la revendication 11, dans laquelle le dispositif de chauffage comprend un four infrarouge ou un four à micro-ondes ou un four laser,
dans lequel le four infrarouge comprend par exemple des plaques de chauffage dans plusieurs zones de lampe, dans laquelle les plaques de chauffage sont conçues pour pouvoir être régulées grâce à la boucle de régulation (1), dans laquelle les plaques de chauffage sont par exemple conçues pour pouvoir être régulées de manière individuelle grâce à la boucle de régulation (1),
ou
dans laquelle, par exemple dans un four à micro-ondes, les positions des éléments coulissants et/ou la puissance de générateur est/sont conçue(s) pour pouvoir être régulée(s) grâce à la boucle de régulation (1), dans laquelle par exemple les éléments coulissants et/ou la puissance de générateur sont conçus pour pouvoir être régulés de manière individuelle grâce à la boucle de régulation (1).

13. Dispositif selon la revendication 11 ou 12, dans laquelle le premier dispositif de mesure (15) est agencé au niveau d'une sortie du dispositif de chauffage et comprend un pyromètre et/ou une caméra thermique conçu(s) pour mesurer des valeurs de température réelles (10) de la préforme chauffée sur sa surface à différentes hauteurs et/ou directions circonférentielles.

14. Dispositif selon l'une quelconque des revendications 11 à 13, dans laquelle le second dispositif de mesure (9) est conçu pour mesurer des valeurs de transmission de lumière réelles (3) des récipients à différentes hauteurs et/ou directions circonférentielles.

15. Procédé de régulation de la transmission de lumière de récipients, par exemple de récipients en **PET,** à l'aide d'un dispositif selon l'une quelconque des revendications 11 à 14, dans laquelle le procédé comprend les étapes consistant à :
- déterminer, au moyen du premier dispositif de mesure (15), une température réelle (10) d'une préforme chauffée, par exemple une préforme en **PET,**
- déterminer, au moyen du second dispositif de mesure (9), une transmission de lumière réelle (3) d'un récipient fabriqué à partir de la préforme chauffée,
- déterminer, au moyen du premier comparateur (4), une première différence de régulation (5) à partir d'une transmission de lumière de consigne (2) et de la transmission de lumière réelle (3),
- émettre, au moyen du premier régulateur (6), un premier ajustement (7) d'un paramètre de procédé d'un poste de la machine de moulage par soufflage, tel qu'un moment de pré-soufflage du poste de la machine de moulage par soufflage, tenant lieu de première valeur de sortie pour un système (16), en se basant sur la première différence de régulation (5) tenant lieu de première valeur d'entrée pour un système (16), et réguler le paramètre de procédé du poste de la machine de moulage par soufflage conformément au premier ajustement (7) et émettre une température de consigne (8) de la préforme chauffée tenant lieu de deuxième valeur de sortie, en se basant sur la première différence de régulation (5) tenant lieu de valeur d'entrée,
- déterminer, au moyen du second comparateur (11), une seconde différence de régulation (12) à partir de la température de consigne (8) de la préforme chauffée et de la température réelle (10) de la préforme chauffée,
- émettre, au moyen du second régulateur (13), un second ajustement (14) d'un comportement de chauffage du dispositif de chauffage tenant lieu de troisième valeur de sortie, en se basant sur la seconde différence de régulation (12) tenant lieu de deuxième valeur d'entrée pour un système (16) et réguler le comportement de chauffage du four conformément au second ajustement (14).
